# FASCICULE DE BREVET EUROPEEN

(11) **EP 0 819 587 B1**
(45) Date de publication et mention de la délivrance du brevet: **17.05.2000**
(21) Numéro de dépôt: 97401565.3
(22) Date de dépôt: 02.07.1997
(51) Int. Cl.: B60R 21/22

(54) **Agencement perfectionné d'un module à sac gonflable dans un élément de siège de véhicule automobile**
Luftsackmodul-Anordnung in einem Fahrzeugsitz
Air bag module arrangement in a vehicle seat

(30) Priorité: 18.07.1996 FR 9609024
(43) Date de publication de la demande: 21.01.1998
(73) Titulaire: ECIA - EQUIPEMENTS ET COMPOSANTS POUR L'INDUSTRIE AUTOMOBILE, F-25400 Audincourt (FR)
(72) Inventeur: Rouhier, Valérie, 45290 Nogent sur Vernisson (FR)
(74) Mandataire: Habasque, Etienne Joel Jean-François

(56) Documents cités:
- DE-A- 1 800 621
- GB-A- 2 293 355
- GB-A- 2 296 476
- US-A- 3 632 132
- US-A- 5 498 030
- PATENT ABSTRACTS OF JAPAN vol. 95, no. 008 & JP 07 215159 A (MAZDA MOTOR CORP), 15 août 1995,

## Description

La présente invention concerne un agencement perfectionné d'un module à sac gonflable dans un élément de siège automobile.

Il est connu d'intégrer un module à sac gonflable dans un dossier de siège de véhicule automobile, plus particulièrement dans un bourrelet latéral de ce dossier afin d'assurer notamment une protection latérale du thorax d'un occupant assis dans le siège.

Un module à sac gonflable comprend généralement un sac associé à un générateur de gaz de gonflage de celui-ci dont le fonctionnement est déclenché par un détonateur.

Le module à sac gonflable est habituellement logé dans un boîtier agencé dans le rembourrage du bourrelet latéral comme cela est décrit par exemple dans GB-A-2 296 476. Cet agencement forme l'object du préambule de la revendication 1.

Le module à sac gonflable et le boîtier forment un ensemble fixé de façon connue en soi à l'armature du siège.

Le boîtier permet, d'une part, de maintenir le sac dégonflé et plié dans un volume d'encombrement réduit, et d'autre part, de protéger le module contre d'éventuelles dégradations par des objets tranchants ou perforants enfoncés dans le siège de façon accidentelle ou malveillante.

Or, pour des raisons de confort, il faut prévoir un boîtier et un module à sac gonflable de dimensions et de formes parfaitement adaptées à chaque type de siège, ce qui empêche toute standardisation du module et augmente les coûts de fabrication d'un siège équipé de ce module.

L'invention a pour but d'agencer sans boîtier un module à sac gonflable dans un siège de véhicule automobile, ce module s'adaptant facilement à un type quelconque de siège et étant efficacement protégé.

A cet effet, l'invention a pour objet un agencement d'un module à sac gonflable dans un élément de siège de véhicule automobile selon la revendication 1.

Suivant d'autres caractéristiques de l'invention:
- la paroi de protection est constituée par une pièce à base de fibres et/ou de mousse de polymère;
- la paroi de protection est collée ou surmoulée sur le rembourrage et/ou la coiffe;
- la surface du rembourrage et/ou de la coiffe délimitant la cavité porte deux parois de protection séparées par une zone de déchirement du rembourrage lors du gonflage du sac;
- la cavité comprend une extrémité débouchant vers l'extérieur du rembourrage obturée par une portion de la coiffe, la paroi de protection étant portée par cette portion de coiffe;
- le sac est maintenu dégonflé plié dans la cavité par emballage dans une enveloppe destructible par gonflage du sac;
- l'enveloppe est constituée par un film en plastique thermorétractable;
- l'élément de siège est un dossier muni d'au moins un bourrelet latéral dans lequel est ménagée la cavité.

L'invention sera mieux comprise à la lecture de la description qui va suivre donnée uniquement à titre d'exemple et faite en se référant aux dessins annexés dans lesquels:
- la figure 1 est une vue en perspective d'un dossier de siège de véhicule automobile dans lequel est agencé, selon un premier mode de réalisation de l'invention, un module à sac gonflable;
- la figure 2 est une vue schématique en coupe suivant un plan sensiblement horizontal, à échelle agrandie, d'un bourrelet latéral du siège représenté à la figure 1, le sac étant dégonflé et plié;
- les figures 3 et 4 sont des vues similaires à la figure 2 représentant un dossier de siège de véhicule automobile dans lequel est agencé un module à sac gonflable, selon des second et troisième modes de réalisation de l'invention, respectivement.

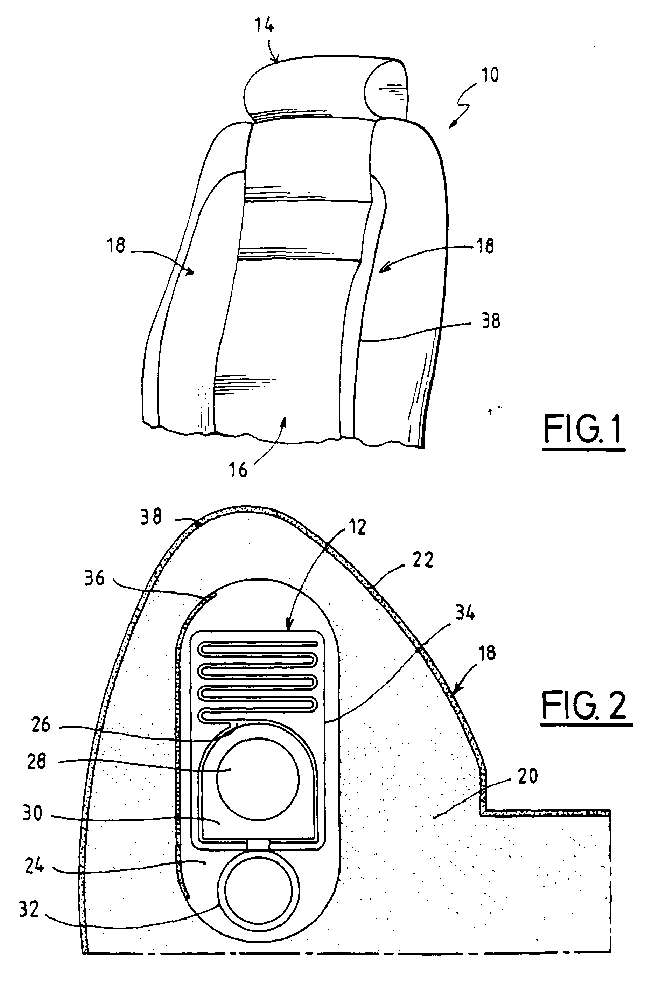

On a représenté sur les figures 1 et 2 un dossier 10 de siège de véhicule automobile dans lequel est agencé, selon un premier mode de réalisation de l'invention, un module 12 à sac gonflable.

De façon classique, le dossier 10 comporte un appui-tête 14 surmontant un coussin 16 muni de deux bourrelets latéraux 18.

Le coussin est muni d'un rembourrage 20 revêtu d'une coiffe 22.

Le module 12 est logé dans une cavité 24 du rembourrage 20 du bourrelet latéral gauche 18, en considérant les orientations habituelles d'un occupant assis dans le siège.

En se référant à la figure 2, on voit que le module 12 comprend un sac gonflable 26 associé à un générateur 28 de gaz de gonflage de ce sac, de forme générale cylindrique.

Le générateur de gaz 28 est porté par un support 30 fixé de façon connue en soi sur un tube d'armature 32 du dossier 10.

Le générateur de gaz 28 et le support 30 sont logés à l'intérieur du sac 26. Le tube d'armature 32 s'étend, au moins partiellement, dans la cavité 24.

De façon classique, le fonctionnement du générateur de gaz 28 est contrôlé par un détonateur qui n'est pas représenté sur les figures.

Le sac 26 est maintenu à l'intérieur de la cavité 24 dans une configuration dégonflée et pliée d'encombrement réduit par emballage dans une enveloppe 34 destructible par gonflage du sac.

L'enveloppe 34 est constituée par exemple par un film plastique thermorétractable.

La surface du rembourrage 20 délimitant la cavité 24 porte une paroi 36 de protection du module 12. La solidité de cette paroi 36 est supérieure à celle du rembourrage 20 et de la coiffe 22 de manière à entraver la pénétration d'objets tranchants ou perforants dans la cavité 24.

La paroi de protection 36 s'étend sensiblement sur la partie gauche de la cavité 24 qui est la plus proche du côté d'accès au siège et qui est la plus exposée à des dégradations éventuelles par des objets tranchants ou perforants.

La paroi de protection 36 est une pièce semi-rigide, de préférence à base de fibres et/ou de mousse de polymère, par exemple une pièce de tissu résistant du type utilisé pour la confection de gilets pare-balles, ou une pièce de mousse de polymère compressée, ou encore une pièce composite de mousse de polyester et de tissu polyamide.

La paroi de protection 36 est fixée sur la surface du rembourrage 20 délimitant la cavité par des procédés et moyens classiques, par exemple par collage ou surmoulage sur le rembourrage 20.

On a également représenté sur la figure 2 une couture frangible 38 ménagée sur la coiffe 18, destinée à se déchirer lors du gonflage du sac 26 pour permettre le déploiement de ce dernier.

Ainsi, en cas de choc déclenchant le gonflage du sac 26, ce dernier se déploie en déchirant l'enveloppe 34, la couture frangible 38 et la matelassure 20 située sensiblement au droit de cette couture 38.

On notera que la paroi de protection 36 s'étendant sur une partie seulement de la cavité 24 n'entrave pas le déploiement du sac 26.

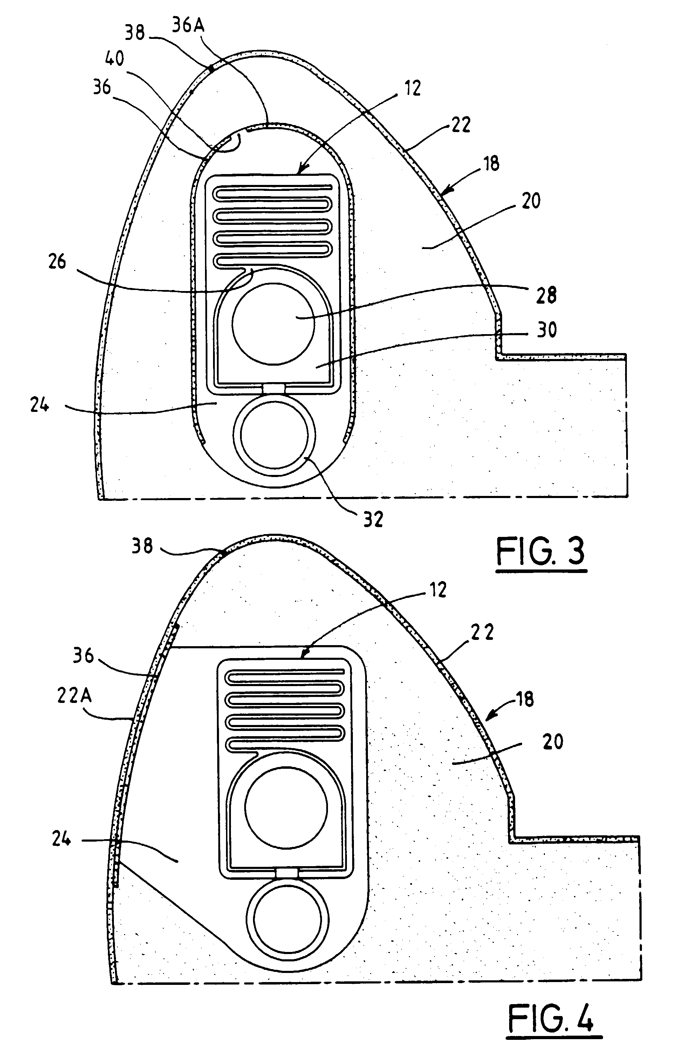

Sur la figure 3, on a représenté le module 12 à sac gonflable agencé, selon un second mode de réalisation de l'invention, dans le bourrelet latéral gauche 18 du dossier.

Dans ce cas, la surface du rembourrage 20 délimitant la cavité 24 porte une autre paroi de protection 36A, similaire à la paroi 36, s'étendant sensiblement sur la partie droite de cette cavité 24.

La protection du module 12 est ainsi renforcée.

Toutefois, les deux parois de protection 36, 36A sont séparées par une zone 40 de déchirement du rembourrage 20 lors du gonflage du sac 26. Cette zone 40 s'étend sensiblement au droit de la couture frangible 38.

Sur la figure 4, on a représenté le module 12 à sac gonflable agencé, selon un troisième mode de réalisation de l'invention, dans le bourrelet latéral gauche 18 du dossier.

Dans ce cas, la cavité 24 comporte une extrémité gauche débouchant vers l'extérieur du rembourrage 20 obturée par une portion 22A de la coiffe.

A la différence des modes de réalisation précédents, la paroi de protection 36 est portée par la surface, interne à la cavité 24, de la portion 22A de coiffe, et éventuellement, par le bord du rembourrage 20 délimitant l'extrémité débouchante de la cavité 24.

La paroi de protection 36 est fixée de façon connue en soi sur la portion 22A de la coiffe et rigidifie sensiblement cette portion, de manière à éviter l'enfoncement de la coiffe au niveau de l'extrémité débouchante de la cavité 24 et optimiser l'aspect esthétique externe du bourrelet 18.

L'invention comporte de nombreux avantages.

En particulier, le module à sac gonflable peut être agencé selon l'invention dans des sièges de type très divers. En effet, le sac plié dans son enveloppe destructible, le générateur de gaz et le support de ce générateur peuvent être standardisés.

L'invention permet de supprimer le boîtier associé habituellement à un module à sac gonflable classique, ceci en assurant une protection efficace du module au moyen de la paroi de protection portée par la surface du rembourrage et /ou de la coiffe délimitant la cavité contenant le module.

On notera que la paroi de protection (36;36A) est masquée par le rembourrage et/ou la coiffe qui la porte, si bien qu'elle n'est pas visible de l'extérieur du siège.

On notera également que l'utilisation d'une paroi de protection selon l'invention est plus économique que l'utilisation d'un boîtier classique pour l'agencement d'un module à sac gonflable.

Par ailleurs, la paroi de protection s'étendant au voisinage de la zone de déchirement du rembourrage lors du déploiement du sac permet de limiter le morcellement de ce rembourrage conduisant habituellement à un effet de neige dans l'habitacle du véhicule.

## Revendications

1. Agencement d'un module (12) à sac gonflable (26) dans un élément (10) de siège de véhicule automobile comprenant un coussin (16) muni d'un rembourrage (20) revêtu d'une coiffe (22), avec au moins une paroi (36,36A) de protection de solidité supérieure à celle du rembourrage (20) et de la coiffe (22), cette paroi de protection étant masquée par le rembourrage et/ou la coiffe, le module étant logé dans une cavité (24) du coussin délimitée par le rembourrage (20) et/ou la coiffe (22), caractérisé en ce que la surface du rembourrage (20) et/ou de la coiffe (22) délimitant cette cavité (24) porte au moins ladite paroi (36,36A) de protection du module (12).

2. Agencement selon la revendication 1, caractérisé en ce que la paroi de protection (36) est constituée par une pièce à base de fibres et/ou de mousse de polymère.

3. Agencement selon la revendication 1 ou 2, caractérisé en ce que la paroi de protection (36) est collée ou surmoulée sur le rembourrage (20) et/ou la coiffe (22).

4. Agencement selon l'une quelconque des revendications 1 à 3, caractérisé en ce que la surface du rembourrage (20) et/ou de la coiffe (22) délimitant la cavité (24) porte deux parois de protection (36, 36A) séparées par une zone (40) de déchirement du rembourrage (20) lors du gonflage du sac.

5. Agencement selon l'une quelconque des revendications 1 à 3, caractérisé en ce que la cavité (24) comprend une extrémité débouchant vers l'extérieur du rembourrage (20) obturée par une portion (22A) de la coiffe, la paroi de protection (36) étant portée par cette portion (22A) de coiffe.

6. Agencement selon l'une quelconque des revendications précédentes, caractérisé en ce que le sac (26) est maintenu dégonflé plié dans la cavité (24) par emballage dans une enveloppe (34) destructible par gonflage du sac.

7. Agencement selon la revendication 6, caractérisé en ce que l'enveloppe (34) est constituée par un film en plastique thermorétractable.

8. Agencement selon l'une quelconque des revendications précédentes, caractérisé en ce que l'élément de siège est un dossier (10) muni d'au moins un bourrelet latéral (18) dans lequel est ménagée la cavité (24).

## Patentansprüche

1. Anordnung eines Moduls (12) mit einem Airbag (26) in einem Kraftfahrzeugsitzelement (10), das ein Polster (16) aufweist, das eine mit einem Bezug (22) bezogene Füllung (20) hat, mit wenigstens einer Schutzwand (36, 36A), deren Festigkeit größer ist als die der Füllung (20) und des Bezuges (22), wobei diese Schutzwand durch die Füllung und/oder den Bezug verdeckt ist, welches Modul in einem Hohlraum (24) des Polsters untergebracht ist, der durch die Füllung (20) und/oder den Bezug (22) begrenzt wird, dadurch gekennzeichnet, daß die Oberfläche der Füllung (20) und/oder des Bezuges (22), die diesen Hohlraum (24) begrenzt, wenigstens die genannte Schutzwand (36, 36A) für das Modul (12) trägt.

2. Anordnung nach Anspruch 1, dadurch gekennzeichnet, daß die Schutzwand (36) durch ein Element auf der Basis von Fasern und/oder Polymerschaum gebildet wird.

3. Anordnung nach Anspruch 1 oder 2, dadurch gekennzeichnet, daß die Schutzwand (36) an die Füllung (20) und/oder den Bezug (22) angeklebt oder angeformt ist.

4. , Anordnung nach einem der Ansprüche 1 bis 3, dadurch gekennzeichnet, daß die Oberfläche der Füllung (20) und/oder des Bezuges (22), die den Hohlraum 24 begrenzt, zwei Schutzwände (36, 36A) trägt, die durch eine beim Aufblasen des Airbags aufreißende Zone (40) der Füllung (20) getrennt sind.

5. Anordnung nach einem der Ansprüche 1 bis 3, dadurch gekennzeichnet, daß der Hohlraum (24) ein zur Außenseite der Füllung (20) offenes Ende aufweist, das durch einen Teil (22A) des Bezuges abgeschlossen ist, wobei die Schutzwand (36) durch diesen Teil (22A) des Bezuges gehalten ist.

6. Anordnung nach einem der vorstehenden Ansprüche, dadurch gekennzeichnet, daß der Airbag (26) durch Verpackung in einer beim Aufblasen des Airbags zerstörbaren Hülle (34) in einem nicht-aufgeblasenen, zusammengefalteten Zustand in dem Hohlraum (24) gehalten ist.

7. Anordnung nach Anspruch 6, dadurch gekennzeichnet, daß die Hülle (34) durch eine Schrumpffolie gebildet wird.

8. Anordnung nach einem der vorstehenden Ansprüche, dadurch gekennzeichnet, daß das Sitzelement eine Lehne (10) ist, die wenigstens eine seitliche Aufpolsterung (18) aufweist, in welcher der Hohlraum (24) ausgebildet ist.

## Claims

1. Arrangement of a unit (12) comprising an air bag (26) in an element (10) of a motor vehicle seat, comprising a cushion (16) provided with padding (20) covered with a cover (22), with at least one protective wall (36, 36A) of greater solidity than the padding (20) and the cover (22), this protective wall being masked by the padding and/or by the cover, the unit being housed in a cushion recess (24) bounded by the padding (20) and/or the cover (22), characterised in that the surface of the padding (20) and/or the cover (22) bounding this recess (24) carries at least said wall (36, 36A) for protecting the unit (12).

2. Arrangement according to claim 1, characterised in that the protective wall (36) consists of a component based on polymer foam and/or fibres.

3. Arrangement according to claim 1 or 2,
characterised in that the protective wall (36) is adhesively bonded or moulded onto the padding (20) and/or the cover (22).

4. Arrangement according to any one of claims 1 to 3, characterised in that the surface of the padding (20) and/or of the cover (22) bounding the recess (24) carries two protective walls (36, 36A) separated by a tear-off zone (40) for the padding (20) when the air bag is inflated.

5. Arrangement according to any one of claims 1 to 3, characterised in that the recess (24) comprises one end opening out to the outside of the padding (20) closed off by a portion (22A) of the cover, the protecting wall (36) being carried by this cover portion (22A).

6. Arrangement according to any one of the preceding claims, characterised in that the air bag (26) is kept uninflated and folded in the recess (24) by packing it into an envelope (34) which is adapted to be destroyed by the inflation of the air bag.

7. Arrangement according to claim 6, characterised in that the envelope (34) consists of a film of heat-shrinkable plastics.

8. Arrangement according to any one of the preceding claims, characterised in that the seat element is a backrest (10) provided with at least one lateral roll (18) in which the recess (24) is formed.
